# EUROPEAN PATENT SPECIFICATION

(11) **EP 3 601 415 B1**
(45) Date of publication and mention of the grant of the patent: **31.08.2022**
(21) Application number: 18719681.1
(22) Date of filing: 03.04.2018
(51) Int. Cl.: C04B 18/24, C04B 28/02, C08H 8/00, C08L 97/02, C08J 5/04, C04B 28/32, C04B 103/32

(54) **METHOD FOR PROCESSING A MIX OF MISCANTHUS FIBERS FOR THE PRODUCTION OF A BIO-BASED COMPOSITE**
VERFAHREN ZUR VERARBEITUNG EINER MISCHUNG AUS MISCANTHUSFASERN ZUR HERSTELLUNG EINES BIOBASIERTEN VERBUNDSTOFFS
PROCÉDÉ DE TRAITEMENT D'UN MÉLANGE DE FIBRES DE MISCANTHUS POUR LA PRODUCTION D'UN COMPOSITE BIOSOURCÉ

(30) Priority: 31.03.2017 NL 2018623
(43) Date of publication of application: 05.02.2020
(60) Divisional application: 22187014.0
(73) Proprietor: Nnrgy B.V., 3221 CB Hellevoetsluis (NL)
(72) Inventor: VAN GILST, Jan-Govert, 3221 CB Hellevoetsluis (NL)
(74) Representative: Renkema, Jaap
(86) International application number: PCT/NL2018/050202
(87) International publication number: WO 2018/182419

(56) References cited:
- EP-A1- 1 908 739
- EP-B1- 0 830 424
- WO-A1-85/03069
- WO-A1-2007/073218
- WO-A1-2014/072533
- AU-A1- 2008 240 327
- DE-A1- 3 007 012
- FR-A- 1 244 862
- US-A- 2 909 439
- US-A- 3 753 749
- US-A1- 2014 004 329
- DATABASE WPI Week 198115 Thomson Scientific, London, GB; AN 1981-26483D XP002781668, -& JP S56 17966 A (ASAHI CHEM IND CO LTD) 20 February 1981 (1981-02-20)
- Hicran Acikel: "The use of miscanthus (Giganteus) as a plant fiber in concrete production", Scientific Research and Essays, 4 July 2011 (2011-07-04), pages 2660-2667, XP055465804, DOI: 10.5897/SRE10.1139 Retrieved from the Internet: URL:http://www.academicjournals.org/articl e/article1380712011_Acikel.pdf [retrieved on 2018-04-10]

## Description

### FIELD OF THE INVENTION

The present invention relates to a method for processing a mix of miscanthus fibers, for the production of a bio-based composite, comprising the step of:
- harvesting miscanthus crops and processing the harvested miscanthus crops to obtain a raw mix of miscanthus fibers. The invention further relates to products containing miscanthus fibers, such as bio-based composites and bio-based concrete.

### BACKGROUND OF THE INVENTION

Such methods are well-known in the art. The prior art discloses many ways of obtaining the raw mix of fibers and the subsequent production of bio-based composites from these fibers.

International (PCT) patent publication WO 2010139056, for instance, relates to methods of manufacturing bio-plastic materials and articles obtained by moulding the plastic materials of the invention.

Chinese patent publication CN 104327525 discloses a biodegradable plastic comprising grass powder, such as miscanthus, as a raw material. The biodegradable plastic comprises 30-60% of the grass powder, 20-45% of PE, 3-10% of a modifying agent, 3-10% of a binder, and 3-5% of a bleaching agent. The grass powder is used as the base raw material and is co-mixed with the PE, the modifying agent, the binder and the bleaching agent to prepare the biodegradable plastic.

German patent publication DE 4336627 discloses a composite material, i.e. a matrix of thermoplastic materials and a fibrous material, e.g. reed or rush. The preferred reed type is 'miscanthus sinensis' which for optimum reinforcement has a size/diameter ratio of 10. Reed bars can be unidirectionally or bidirectionally embedded in the plastic matrix.

European patent publication EP 0830424 A1 discloses a plastic-based composite product which consists at least partially of a plastic in which a material consisting substantially of particles is homogeneously embedded, which particles have tensile strength in at least one principal direction. The particles comprise: small particles, in particular plates or fibres with a random orientation and a size of 0.2-2 mm; and large particles with a dominant orientation, for instance 80-95%, of the said principal direction of the particles in a chosen product principal direction and a size in the particle principal direction of about 2-6 mm.

European patent publication EP 2647758 A1 describes methods for the industrial production of fiber reinforced composites utilizing wastes from the intensive agriculture of musa genus, bananas, plantains, abaca etc. These methods describe ways for the extraction of the fibers from the dried pseudo-stem's lignocellulose matrix and using the lignocellulose matrix in turn to produce a reactive adhesive resin that can encapsulate the obtained fibers to produce a fiber-reinforced composite material which can be biodegraded by micro-organisms.

International (PCT) patent publication WO 2006048332 A1 is directed to an extrudable compound, an extrusion method, and an extruded product comprising a polymer, a cellulosic fiber, and at least one lubricant selected from the group consisting of esters of ethoxylated hydantoins, esters of ethoxylated sorbitol or sorbitan, or N,N'-bisalkanoylethylenediamines containing from 8 to 14 carbon atoms in each alkanyl group. Extruded products manufactured according to the invention simulate conventional wood products.

In practice, however, it appears that the quality and properties of the mix of fibers ending up in matrix of the final product are quite unpredictable, leading to the final product having unpredictable performance. Furthermore, the environment-friendliness of the final product is lower than expected due to suboptimal use of the available fiber mix: fibers may be present having physical/chemical properties that are actually detrimental to the end product, such as high absorption of moisture when low absorption of moisture is actually required. Sometimes, the end product has such a low quality that the end product is to be discarded altogether, effectively due to the low quality of the used fiber mix.

EP1908739 A1 discloses a vegetable additive building material comprising 1000 I of vegetable additive with a specific weight of 70-160 kg/m³, 40-80 kg of white lime hydrate-mineralizer and 200-280 kg of binding agent of cement basis. EP1908739 A1 does not disclose separating a raw mix of lignocellulose fibers into a fraction wherein at least 50wt% of the miscanthus fibers have a fiber size between 2 and 8 mm and mixing it with a mortar to obtain a concrete mixture.

### OBJECT OF THE INVENTION

An object of the invention is therefore to provide a method for processing a mix of miscanthus fibers for the production of a bio-based composite, wherein the quality and properties of the mix of fibers ending up in matrix of the final product are more predictable, leading to more predictable performance of the final composite product.

Another object of the invention is to prepare bio-based composites having improved compostability.

Another object is to prepare a concrete containing miscanthus fibers having improved properties.

A further object of the invention is to provide a method for processing a mix of miscanthus fibers for the production of a bio-based composite, wherein optimal use is made of the quantity of available fiber mix.

### DESCRIPTION OF THE INVENTION

Hereto, the method according to the invention is characterized by claim 1.

Applicant has found that lignocellulose fibers, in particular miscanthus fibers, display highly different physical/chemical properties based primarily on their fiber size. Therein, s1 is preferably to be determined by performing one or more (iterative) tests/experiments, preferably on the same batch/crop harvest, in view of the desired physical/chemical properties of the fiber fraction(s) f1, f2 in the bio-based composite or final product.

Preferably, the harvesting step comprises chopping of the fibers. The separation step preferably comprises (in a consecutive manner) one or more subsequent sieving and grinding steps.

Preferably, a dry miscanthus crop is used (i.e. comprising mainly plant dry matter/biomass), such that the raw mix of miscanthus fibers comprises at least 80 wt%, preferably at least 90 or 91 wt% dry fibers. In practice 5-20 wt% water will remain in the raw mix of miscanthus fibers. For instance, when the raw mix of fibers can immediately be processed (while harvesting) by a chopping device, such as a maize/corn chopping device, without having to dry the raw mix of fibers prior to further processing.

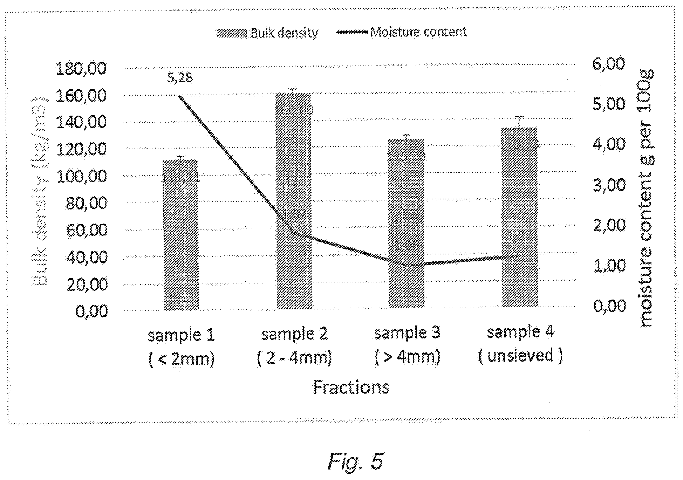

For example, during such tests Applicant has found that when s1 is chosen roughly around 2 mm, fibers having a fiber size lower than 2 mm generally display high moisture absorption capabilities, whereas fibers having a fiber size larger than roughly 2 mm show a sharp, unexpected drop in such moisture absorption capabilities - as shown by the solid line in Figure 5, which shows the results of the abovementioned tests.

Analogously, the bulk density of fibers having a fiber size of roughly 2 - 4 mm is higher than the bulk density of fibers having a fiber size lower than roughly 2 mm, a fiber size larger than roughly 4 mm or even the fiber sizes present in an unsieved sample. In this case s1 can thus be chosen again at roughly 2 mm, when the fibers are to be used in a bio-composite requiring the fibers to have a high bulk density, for instance bio-concrete.

Thus, Applicant is of the opinion that, prior to processing the fibers, it is recommendable to separate the raw fiber mix into fractions having different fiber sizes to ensure that the physical/chemical properties of the mix of fibers ending up in the matrix of the final product are as predictable as possible and therefore lead to predictable performance of the final composite product.

Furthermore, it is very well possible to use the first fiber fraction with a first type of product (say: diapers, requiring high absorption of moisture) and the second fraction with a second type of product (say: an interior component of a car, requiring low absorption of moisture) so that optimal use is made of the available fiber mix. Also, it is of course possible to mix the first fraction with the second fraction when the physical/chemical properties of the individual fractions are known and at least some prediction can be made as to the final properties of the obtained mix.

It is possible to grind fibers having a large fiber size (for example larger than 10 mm) into fibers having shorter fiber size (for example below 2 mm, between 2 and 4 mm and between 4 and 8 mm).

In the context of the present patent application 'fiber size' generally relates to 'fiber length'. Situations are, however, conceivable wherein fiber width exceeds fiber length - such as with very small fiber lengths - and therefore the use of the expression fiber size is thus deemed to be more appropriate. The fiber size is determined by sieving, preferably by sieving with an air jet sieve. The air jet sieve is a sieving machine for single sieving, i.e. for each sieving process only one sieve is used. The sieve itself is not moved during the process. The material on the sieve is moved by a rotating jet of air: A vacuum cleaner which is connected to the sieving machine generates a vacuum inside the sieving chamber and sucks in fresh air through a rotating slit nozzle. When passing the narrow slit of the nozzle the air stream is accelerated and blown against the sieve mesh, dispersing the particles. Above the mesh, the air jet is distributed over the complete sieve surface and is sucked in with low speed through the sieve mesh. Thus, the finer particles are transported through the mesh openings into the vacuum cleaner or, optionally, into a cyclone.

From tests performed by the Applicant (such as shown in Figure 5), it appears that moisture absorption is generally optimal for fibers having a fiber size smaller than the above stated fiber sizes. Preferably, when the bio-based composite is a bio-based concrete, s2 = 2-8 mm, or s2 = 3.0 - 5.0 mm, preferably 3.5 - 4.5 mm, such as for example 4 mm. An embodiment relates to an aforementioned method, comprising the step of:
- separating the second fraction, such as by sieving and grinding, into a third fraction comprising a mix of fibers having a fiber size of approximately > s1 and approximately < s2 and a fourth fraction comprising a mix of fibers having a fiber size of approximately > s2. Thus, a further distinction can be made with respect to fiber size, especially when s1 is chosen to be rather small and the second fraction comprises fibers having widely differing fiber sizes and fibers that are too large for any useful purpose. The third fraction therein can advantageously serve as an "intermediate" fraction - often exhibiting an optimal level of a certain desired physical/chemical property. Of course, the first fraction can also be separated into further fractions, if desired, in particular when s1 is chosen to be rather large.

The inventors have found that use of different sizes of miscanthus fibers in concrete mixtures gives biobased concrete having different properties. The invention therefore also relates to a biobased concrete mixture having between 5 and 13 vol% of miscanthus fibers, wherein at least 70 wt% of the fibers have a fiber size between 2 and 8 mm. The 5 to 13 vol% of fibers relate to 1 to 2.6 wt% of fibers, relative to the concrete mixture (before curing). The biobased concrete mixture will harden to a biobased concrete.

The biobased concrete mixture also contains between 0.01 to 1 wt% of a superplasticizer relative to the total weight of the concrete mixture. Examples of superplasticizers are polycarboxylate ether plasticizers, which are graft copolymers of methoxy polyethyleneglycol copolymer (side chain) with methacrylic acid copolymers.

This biobased concrete mixture has the advantage that the concrete mixture is self-consolidating and after curing/hardening yields a strong concrete. The concrete mixture flows easily and vibrating of the fresh concrete mixture is not needed.

This concrete mixture containing miscanthus can be made in a process comprising the steps of
a) weighing the materials
b) dry mixing of the powders, namely cement and fillers other than sand
c) adding sands and dry mixing of sands with powders
d) adding 75% of required water and homogeneously mixing the content
e) optionally letting the mix rest for about 1 minute
f) addition of a superplasticizer + remaining 25% water and continue the slow mixing
g) adding dry miscanthus fibres and continue the slow mixing
h) add additional water (2.5 g water per 1 gr fiber) and continue slow mixing
i) optionally increasing the mixing speed to separate any clumping fibres to obtain the miscanthus containing concrete mixture.

Another aspect of the invention concerns a method for producing a bio-based composite by using the first fraction, the second fraction, the third fraction and/or the fourth fraction according to an aforementioned method, further comprising the steps of:
- mixing the fibers of the first fraction, the second fraction, the third fraction and/or the fourth fraction with a binding agent, wherein the mixing ratio is determined based on the desired properties of the bio-based composite to be produced,
- letting the binding agent cure, to obtain the bio-based composite.

The abovementioned bio-based composite is a bio-concrete.

The amount of fibers having a fiber size smaller than 0.5 mm ranges between 0.1 and 10 wt% relative to the total of the biobased composite.

Applicant therein has found that the fibers often 'burn' when high extrusion temperatures are used, leading to foul or 'burnt' odors. Applicant has found that when an extrusion temperature of about 160 - 170 °C, such as around 165 °C, is used, the occurrence of foul odors is reduced. Applicant has found during tests that with the abovementioned first further separated fraction fiber sizes foul odors are even almost non-existent, possibly due to the lower friction in the extruder.

An embodiment relates to an aforementioned method, wherein the first fraction constitutes at least 70%, more preferably at least 80%, even more preferably at least 90%, most preferably around 100%, of the fiber mix to be mixed with the binding agent, such that the physical/chemical properties of the first fraction prevail in the end product. As the skilled person will understand, the percentages mentioned throughout this patent application concern % weight, unless indicated otherwise.

An embodiment relates to an aforementioned method, wherein the third fraction constitutes at least 70%, more preferably at least 80%, even more preferably at least 90%, most preferably around 100%, of the fiber mix to be mixed with the mortar, such that the properties of the third fraction, or "intermediate fraction", are dominant in the end product.

### BRIEF DESCRIPTION OF THE DRAWINGS

The present invention will be explained hereafter with reference to exemplary embodiments of a method according to the invention and with reference to the drawings. Therein:
Figure 1 schematically shows a method for processing a mix of lignocellulose fibers for the production of a bio-based composite;
Figure 2 schematically shows a method for processing a mix of lignocellulose fibers for the production of a bio-based composite, wherein the bio-based composite is processed into a granulate;

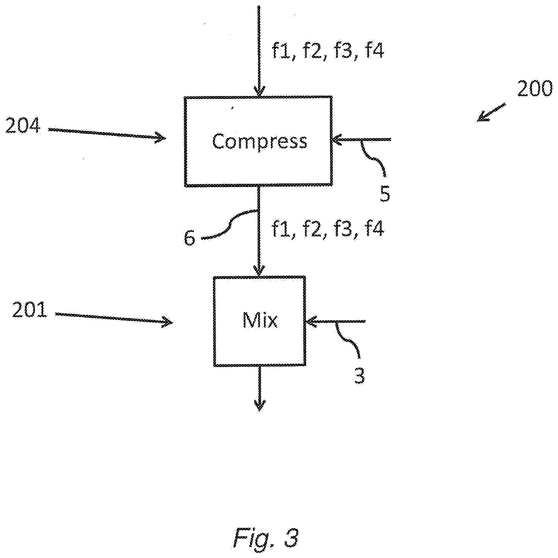

Figure 3 schematically shows a method for compressing the mix of fibers into pellets and mixing the pellets with the binding agent;
Figure 4 schematically shows a method for processing the granulate into a foil; and
Figure 5 shows a graph depicting bulk density and moisture content for several fiber fraction samples.

### DETAILED DESCRIPTION

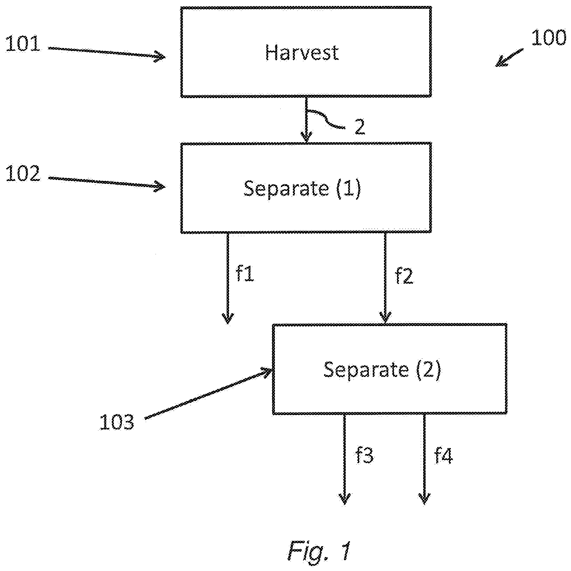

Figure 1 schematically shows a method 100 for processing a mix of miscanthus fibers, for the production of a bio-based composite 1. The method 100 comprises the steps of:
- harvesting 101 miscanthus crops and processing the harvested miscanthus crops to obtain a raw mix of miscanthus fibers 2. According to the invention, the method is characterized by
- separating 102 the raw mix of miscanthus fibers 2, such as by sieving and grinding, into a first fraction f1 comprising a mix of fibers having a fiber size of approximately < s1 and having first physical/chemical properties and a second fraction f2 comprising a mix of fibers having a fiber size of approximately > s1 and having second physical/chemical properties being different from the first physical/chemical properties. Preferably, s1 = 1.0 - 3.0 mm, more preferably 1.5 - 2.5 mm, such as 2 mm. Preferably, the harvesting step comprises chopping of the fibers. The separation step preferably comprises (in a consecutive manner) one or more subsequent sieving and grinding steps.

To characterize for instance the moisture content (as physical property) of the first fraction f1 and the second fraction f2, the individual fractions f1, f2 (i.e. samples thereof) can be heated, such as overnight, to a temperature of 90 - 110 °C, such as around 105 °C, to determine their respective moisture content. Thus, by experimenting with different values for s1, an optimal value for s1 can be determined in order to have a first fraction f1 or second fraction f2 with a certain desired moisture content.

The density of the respective fraction f1, f2 can be determined using one of the abovementioned (dried) samples, and a He-Pycnometer. Thus, analogously, by experimenting with different values for s1, an optimal value for s1 can be determined in order to have a first fraction f1 or second fraction f2 with a certain desired density.

Water absorption, for instance, can be determined using a hydrostatic balance for each individual size fraction f1, f2 as an indication of the amount of water the bio-based composite 1 or the final product comprising such fractions f1, f2 can absorb. When the bio-based composite 1 is a bio-based concrete mixture, comprising a cement or mortar, the influence of the fibers of the first and second fractions f1, f2 on cement hydration, isothermal calorimetry can be used (with relatively small samples of for instance 10 ml). The fractions f1, f2 can for instance by ground in a mill, such as a ball mill, and then mixed with cement. The heat generated during hydration can be measured and compared to 'neat' cement paste. The miscanthus fibers are boiled in water to leech organics from the fibers. The water is then mixed with cement and the influence on hydration measured. After initial assessment with isothermal calorimetry, larger volume/lignocellulose mixes can be made in insulated moulds and the temperature measured during hydration. The lignocellulose will be mixed 'as-is', giving less accurate but more realistic information about the influence of lignocellulose on cement hydration.

Based on the above measurements/characterizations, in case of a bio-based concrete as the bio-based composite 1 to be obtained, multiple recipes with varying lignocellulose/cement/water ratios can be made and tested for physical/chemical properties (such as mechanical properties, densities, rheological properties).

Ways to pre-treat the miscanthus fibers, such as by soaking in water or salt solutions, can be tested and applied in cement.

Preferably, the above steps are to be repeated with lignocellulose harvested in a different year, season, location, soil type, et cetera to obtain an indication of the 'natural' variation of physical/chemical properties.

As shown in figure 1, the second fraction f2 can be separated 103 further, such as by sieving and grinding, into a third fraction f3 comprising a mix of fibers having a fiber size of approximately > s1 and approximately < s2 and a fourth fraction f4 comprising a mix of fibers having a fiber size of approximately > s2. Preferably, s2 = 3.0 - 5.0 mm, more preferably 3.5 - 4.5 mm, such as 4 mm.

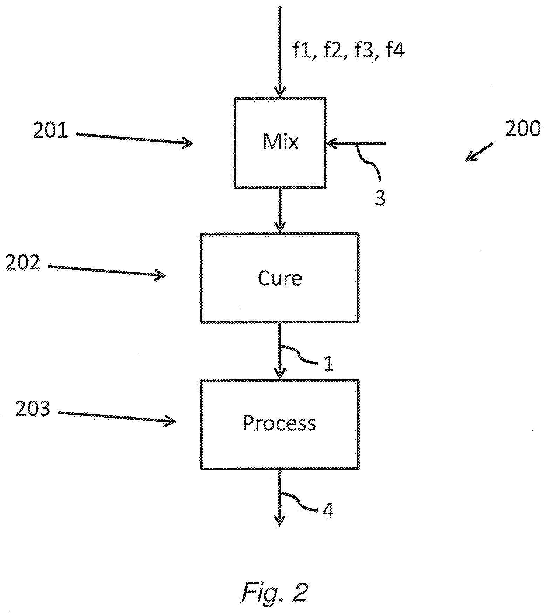

Figure 2 schematically shows a method 200 for producing a bio-based composite 1 by using the first fraction f1, the second fraction f2, the third fraction f3 and/or the fourth fraction f4, further comprising the steps of:
- mixing 201 the fibers of the first fraction f1, the second fraction f2, the third fraction f3 and/or the fourth fraction f4 with a binding agent 3, wherein the mixing ratio is determined based on the desired properties of the bio-based composite 1 to be produced,
- letting the binding agent 3 cure 202, to obtain the bio-based composite 1.

A further step of the method 200 could comprise the further step of:
- processing 203 the bio-based composite into a granulate 4.

The method 200 (not claimed) could comprise the further steps of
- compressing 204 the fibers of the first fraction f1, the second fraction f2, the third fraction f3 and/or the fourth fraction f4 into pellets 6 under the addition of an adhesive agent 5, such as maltodextrin,
- mixing 201 the pellets 6 containing the fibers of the first fraction f1, the second fraction f2, the third fraction f3 and/or the fourth fraction f4 with the binding agent 3 and letting the binding agent 3 cure to obtain the bio-based composite 1, and
- processing 203 the bio-based composite 1 into the granulate 4.

The binding agent 3 may be a plastic (not claimed) and the mixing of the pellets 6 with the binding agent 3 is performed with a plastics extruder. More preferably, s1 is chosen at around 0.5 mm and a first fraction f1 having fibers of a size smaller than 0.5 mm is then used to create the pellets 6. Such pellets 6 are easy to create by compression, are easily mixable with the binding agent 3 and are easy to process into the granulate 4.

Maltodextrin, by the way, advantageously becomes warm, e.g. as a result of friction in the press, and consequently sticky, when compressed (i.e. during compression of the pellets 6).

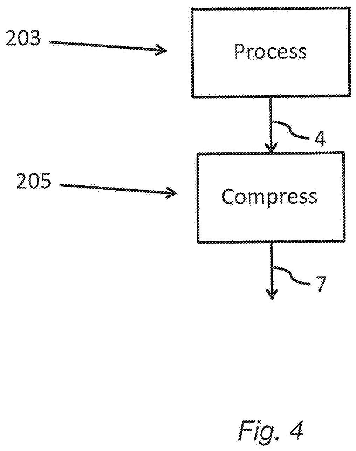

As shown in figure 4, the method 200 (not claimed) could comprise the further step of:
- compressing 204 the granulate 4 into a foil 7.

In an embodiment, the first fraction f1 could constitute at least 70%, more preferably at least 80%, even more preferably at least 90%, most preferably around 100%, of the fiber mix 2 to be mixed with the binding agent 3.

When cutting the edges of the foil 7, before rolling the foil 7 up into or onto a roll, preferably round knives (i.e. "pizza knives") are used to obtain a neat edge (instead of e.g. Stanley knives).

Preferably, the fibers are mixed with a natural polymer (instead of relatively unnatural polymers such as PE and PP) to improve compostability of the product, leading to a lower burden on the environment.

The bio-based composite 1 is a bio-based concrete mixture and the binding agent 3 is a mortar.

Alternatively, the third fraction f3 could constitute at least 70%, more preferably at least 80%, even more preferably at least 90%, most preferably around 100%, of the fiber mix 2 to be mixed with the mortar.

It should be clear that the description above is intended to illustrate the operation of preferred embodiments of the invention, and not to reduce the scope of protection of the invention. Starting from the above description, many embodiments will be conceivable to the skilled person within the inventive concept and scope of protection of the present invention.

### LIST OF REFERENCE NUMERALS

- 1.: Bio-based composite
- 2.: Raw mix of lignocellulose (miscanthus) fibers
- 3.: Binding agent
- 4.: Granulate
- 5.: Adhesive agent
- 6.: Pellets
- 7.: Foil
- 100.: Method for processing a mix of lignocellulose fibers for the production of a bio-based composite.
- 101.: Harvesting step
- 102.: Separating step (1)
- 103.: Separating step (2)
- 200.: Method for producing a bio-based composite
- 201.: Mixing step
- 202.: Curing step
- 203.: Processing into granulate step
- 204.: Compression into pellets step
- 205.: Compression into foil step

### Example 1

A miscanthus based mortar is prepared with the following process:
- weigh the materials
- 1st minute : dry mixing of the powders
- 2nd minute: add sands; dry mixing of sands with powders
- 3rd minute: add 75% of required water and check if everything is mixing thoroughly
- 4th minute: let the mix rest for 1 minute
- 5th & 6th minute: add the superplasticizer + remaining 25% water and continue the slow mixing
- 7th minute : add the dry fibres and continue the slow mixing
- 8th & 9th minute: add the additional (2.5 g water per 1 gr fibre) and continue slow mixing (level 1)
- 10th & 11th minute: increase the mixing speed to separate any clumping fibres.

**Particle size distribution for mortar production**

| **Fraction sizes** | **Average (g)** | **Standard Deviation (g)** | **Percentage (%)** | **Cumulative percentage (%)** |
|---|---|---|---|---|
| **Unsieved** | 91.83 | 0.05 | - | |
| **< 2 mm** | 1.53 | 0.45 | 23.15 | 23 |
| **2 - - 4 mm** | 4.90 | 0.75 | 55.10 | 78 |
| **4 - 5.6 mm** | 9.93 | 2.00 | 14.84 | 93 |
| **5.6 - 8 mm** | 54.07 | 1.45 | 5.48 | 99 |
| **> 8 mm** | 24.20 | 3.05 | 1.40 | 100 |

## Claims

1. Method for processing a mix of miscanthus fibers for the production of a bio-based composite (1), comprising the steps of:
- harvesting miscanthus crops and processing the harvested miscanthus crops to obtain a raw mix of miscanthus fibers (2),
- separating the raw mix of miscanthus fibers, such as by sieving and grinding, into a first fraction (f1) comprising a mix of miscanthus fibers having a fiber size of approximately < s1 and having first physical/chemical properties and a second fraction (f2) comprising a mix of miscanthus fibers having a fiber size of approximately > s1 and having second physical/chemical properties being different from the first physical/chemical properties,
- mixing the miscanthus fibers of the first fraction (f1) or the miscanthus fibers of the second fraction (f2) with a binding agent (3),
- letting the binding agent harden, to obtain the bio-based composite, wherein the binding agent is a mortar, at least 50wt% of the miscanthus fibers have a fiber size between 2 and 8 mm and the amount of miscanthus fibers range between 5 and 13 vol%, to obtain a concrete mixture,
wherein the concrete mixture contains between 0.01 to 1 wt% of a superplasticizer,
wherein s1 is determined by performing one or more iterative tests/experiments, in view of the desired physical/chemical properties of the fiber fractions f1, f2 in the bio-based composite and wherein fiber size is determined by sieving as described in the description.

2. The method according to claim 1, further comprising the steps of
a) weighing the materials
b) dry mixing of powders, namely cement and fillers other than sand
c) adding sands and dry mixing of sands with powders
d) adding 75% of required water and homogeneously mixing the content
e) optionally letting the mix rest for about 1 minute
f) addition of a superplasticizer + remaining 25% water and continue the slow mixing
g) adding dry miscanthus fibres and continue the slow mixing
h) add additional water and continue slow mixing optionally increasing the mixing speed to separate any clumping miscanthus fibres to obtain the miscanthus containing concrete mixture.

3. Method according to claim 1 or 2, wherein the superplasticizer is a polycarboxylate ether plasticizer.

4. Method according to any one of the preceding claims, wherein the miscanthus crop is a dry crop and the raw mix of miscanthus fibers comprises at least 80 wt%, preferably at least 90 or 91 wt% dry fibers and between 5-20 wt% water.

5. Method according to any one of the preceding claims, comprising the step of:
- separating the second fraction (f2), such as by sieving and grinding, into a third fraction (f3) comprising a mix of fibers having a fiber size of approximately > s1 and approximately < s2 and a fourth fraction (f4) comprising a mix of fibers having a fiber size of approximately > s2.

6. Method for producing a bio-based composite by using the first fraction, the second fraction, the third fraction and/or the fourth fraction according to claim 5, further comprising the steps of:
- mixing the fibers of the first fraction, the second fraction, the third fraction and/or the fourth fraction with a binding agent (3), wherein the mixing ratio is determined based on the desired properties of the bio-based composite to be produced,
- letting the binding agent cure, to obtain the bio-based composite.

7. Method according to any one of the preceding claims, wherein the first fraction constitutes at least 70%, more preferably at least 80%, even more preferably at least 90%, most preferably around 100%, of the miscanthus fiber mix to be mixed with the binding agent.

8. A biobased concrete mixture comprising between 5 and 13 vol% of miscanthus fibers, wherein at least 70 wt% of the miscanthus fibers have a fiber size between 2 and 8 mm and containing between 0.01 to 1 wt% of a superplasticizer relative to the total weight of the concrete mixture, and wherein the superplasticizer preferably comprises a polycarboxylate ether plasticizer.

## Patentansprüche

1. Verfahren zum Verarbeiten einer Mischung von Miscanthusfasern zur Herstellung eines biobasierten Verbundstoffs (1), umfassend die Schritte:
- Ernten von Miscanthuskulturpflanzen und Verarbeiten der geernteten Miscanthuskulturpflanzen, um eine Rohmischung aus Miscanthusfasern (2) zu erhalten,
- Trennen der Rohmischung aus Miscanthusfasern, wie durch Sieben und Mahlen, in eine erste Fraktion (f1), die eine Mischung aus Miscanthusfasern mit einer Fasergröße von ungefähr < s1 und mit ersten physikalisch-chemischen Eigenschaften umfasst, und eine zweite Fraktion (f2), die eine Mischung aus Miscanthusfasern mit einer Fasergröße von ungefähr > s1 und mit zweiten physikalisch-chemischen Eigenschaften umfasst, die sich von den ersten physikalisch-chemischen Eigenschaften unterscheiden,
- Mischen der Miscanthusfasern der ersten Fraktion (f1) oder der Miscanthusfasern der zweiten Fraktion (f2) mit einem Bindemittel (3),
- Aushärtenlassen des Bindemittels, um den biobasierten Verbundstoff zu erhalten, wobei das Bindemittel ein Mörtel ist, mindestens 50 Gew.-% der Miscanthusfasern eine Fasergröße zwischen 2 und 8 mm aufweisen und die Menge an Miscanthusfasern im Bereich zwischen 5 und 13 Vol.-% liegt, um eine Betonmischung zu erhalten,
wobei die Betonmischung zu zwischen 0,01 bis 1 Gew.-% einen Hochleistungsverflüssiger enthält,
wobei s1 durch Durchführen eines oder mehrerer iterativer Tests/Experimente im Hinblick auf die gewünschten physikalisch-chemischen Eigenschaften der Faserfraktionen f1, f2 in dem biobasierten Verbundstoff bestimmt wird und wobei die Fasergröße durch Sieben wie in der Beschreibung beschrieben bestimmt wird.

2. Verfahren nach Anspruch 1, ferner umfassend die Schritte
a) Wiegen der Materialien
b) Trockenmischen von Pulvern, nämlich Zement und anderen Füllstoffen als Sand
c) Zugeben von Sanden und Trockenmischen von Sanden mit Pulvern
d) Zugeben von 75 % des erforderlichen Wassers und homogenes Mischen des Inhalts
e) optionales Stehenlassen der Mischung für etwa 1 Minute
f) Zugabe eines Hochleistungsverflüssigers + der restlichen 25 % Wasser und Fortsetzen des langsamen Mischens
g) Zugeben von trockenen Miscanthusfasern und Fortsetzen des langsamen Mischens
h) Zugeben von zusätzlichem Wasser und Fortsetzen des langsamen Mischens, gegebenenfalls Erhöhen der Mischgeschwindigkeit zum Trennen etwaiger verklumpender Miscanthusfasern, um die miscanthushaltige Betonmischung zu erhalten.

3. Verfahren nach Anspruch 1 oder 2, wobei der Hochleistungsverflüssiger ein Polycarboxylatether-Verflüssiger ist.

4. Verfahren nach einem der vorstehenden Ansprüche, wobei die Miscanthuskulturpflanze eine trockene Kulturpflanze ist und die Rohmischung aus Miscanthusfasern zu mindestens 80 Gew.-%, vorzugsweise zu mindestens 90 oder 91 Gew.-% trockene Fasern und zwischen 5-20 Gew.-% Wasser umfasst.

5. Verfahren nach einem der vorstehenden Ansprüche, umfassend den Schritt:
- Trennen der zweiten Fraktion (f2), wie durch Sieben und Mahlen, in eine dritte Fraktion (f3), die eine Mischung aus Fasern mit einer Fasergröße von ungefähr > s1 und ungefähr < s2 umfasst, und eine vierte Fraktion (f4), die eine Mischung aus Fasern mit einer Fasergröße von ungefähr > s2 umfasst.

6. Verfahren zum Herstellen eines biobasierten Verbundstoffs unter Verwendung der ersten Fraktion, der zweiten Fraktion, der dritten Fraktion und/oder der vierten Fraktion nach Anspruch 5, ferner umfassend die Schritte:
- Mischen der Fasern der ersten Fraktion, der zweiten Fraktion, der dritten Fraktion und/oder der vierten Fraktion mit einem Bindemittel (3), wobei das Mischungsverhältnis basierend auf den gewünschten Eigenschaften des herzustellenden biobasierten Verbundstoffs bestimmt wird,
- Aushärtenlassen des Bindemittels, um den biobasierten Verbundstoff zu erhalten.

7. Verfahren nach einem der vorstehenden Ansprüche, wobei die erste Fraktion mindestens 70 %, mehr bevorzugt mindestens 80 %, noch mehr bevorzugt mindestens 90 %, am meisten bevorzugt etwa 100 % der mit dem Bindemittel zu mischenden Miscanthusfasermischung ausmacht.

8. Biobasierte Betonmischung, die zu zwischen 5 und 13 Vol.-% Miscanthusfasern umfasst, wobei mindestens 70 Gew.-% der Miscanthusfasern eine Fasergröße zwischen 2 und 8 mm aufweisen, und zu zwischen 0,01 bis 1 Gew.-%, bezogen auf das Gesamtgewicht der Betonmischung, einen Hochleistungsverflüssiger enthält, und wobei der Hochleistungsverflüssiger vorzugsweise einen Polycarboxylatether-Verflüssiger umfasst.

## Revendications

1. Procédé de traitement d'un mélange de fibres de miscanthus pour la production d'un composite biosourcé (1), comprenant les étapes consistant à :
- récolter des cultures de miscanthus et traiter les cultures de miscanthus récoltées pour obtenir un mélange brut de fibres de miscanthus (2),
- séparer le mélange brut de fibres de miscanthus, tel que par tamisage et broyage, en une première fraction (f1) comprenant un mélange de fibres de miscanthus ayant une taille de fibre approximativement < s1 et ayant de premières propriétés physiques/chimiques et une deuxième fraction (f2) comprenant un mélange de fibres de miscanthus ayant une taille de fibre approximativement > s1 et ayant des deuxièmes propriétés physiques/chimiques différentes des premières propriétés physiques/chimiques,
- mélanger les fibres de miscanthus de la première fraction (f1) ou les fibres de miscanthus de la deuxième fraction (f2) avec un agent de liaison (3),
- laisser durcir l'agent de liaison, pour obtenir le composite biosourcé, dans lequel l'agent de liaison est un mortier, au moins 50 % en poids des fibres de miscanthus ont une taille de fibre entre 2 et 8 mm et la quantité de fibres de miscanthus se situe entre 5 et 13 % en volume, pour obtenir un mélange de béton,
dans lequel le mélange de béton contient entre 0,01 et 1 % en poids d'un superplastifiant,
dans lequel s1 est déterminé en mettant en œuvre un ou plusieurs essais/expériences itératifs, dans la perspective des propriétés physiques/chimiques souhaitées des fractions de fibre f1, f2 dans le composite biosourcé et dans lequel la taille de fibre est déterminée par tamisage comme décrit dans la description.

2. Procédé selon la revendication 1, comprenant en outre les étapes consistant à
a) peser les matériaux
b) mélanger à sec les poudres, à savoir le ciment et les charges autres que du sable
c) ajouter des sables et mélanger à sec les sables avec les poudres
d) ajouter 75 % de l'eau requise et mélanger de façon homogène le contenu
e) facultativement laisser reposer le mélange pendant environ 1 minute
f) addition d'un superplastifiant + les 25 % d'eau restants et continuer le mélange lent
g) ajouter des fibres sèches de miscanthus et continuer le mélange lent
h) ajouter de l'eau supplémentaire et continuer le mélange lent en augmentant facultativement la vitesse de mélange pour séparer d'éventuelles agrégations de fibres de miscanthus pour obtenir le mélange de béton contenant du miscanthus.

3. Procédé selon la revendication 1 ou 2, dans lequel le superplastifiant est un plastifiant éther de polycarboxylate.

4. Procédé selon l'une quelconque des revendications précédentes, dans lequel la culture de miscanthus est une culture sèche et le mélange brut de fibres de miscanthus comprend au moins 80 % en poids, de préférence au moins 90 ou 91 % en poids de fibres sèches et entre 5 et 20 % en poids d'eau.

5. Procédé selon l'une quelconque des revendications précédentes, comprenant l'étape consistant à :
- séparer la deuxième fraction (f2), tel que par tamisage et broyage, en une troisième fraction (f3) comprenant un mélange de fibres ayant une taille de fibre approximativement > s1 et approximativement < s2 et une quatrième fraction (f4) comprenant un mélange de fibres ayant une taille de fibre approximativement > s2.

6. Procédé de production d'un composite biosourcé en utilisant la première fraction, la deuxième fraction, la troisième fraction et/ou la quatrième fraction selon la revendication 5, comprenant en outre les étapes consistant à :
- mélanger les fibres de la première fraction, de la deuxième fraction, de la troisième fraction et/ou de la quatrième fraction avec un agent de liaison (3), dans lequel le rapport de mélange est déterminé sur la base des propriétés souhaitées du composite biosourcé à produire,
- laisser durcir l'agent de liaison, pour obtenir le composite biosourcé.

7. Procédé selon l'une quelconque des revendications précédentes, dans lequel la première fraction constitue au moins 70 %, plus préférablement au moins 80 %, encore plus préférablement au moins 90 %, le plus préférablement environ 100 %, du mélange de fibres de miscanthus à mélanger avec l'agent de liaison.

8. Mélange de béton biosourcé comprenant entre 5 et 13 % en volume de fibres de miscanthus, dans lequel au moins 70 % en poids des fibres de miscanthus ont une taille de fibre entre 2 et 8 mm et contenant entre 0,01 et 1 % en poids d'un superplastifiant par rapport au poids total du mélange de béton, et dans lequel le superplastifiant comprend de préférence un plastifiant éther de polycarboxylate.
